# FASCICULE DE BREVET EUROPEEN

(11) **EP 3 456 579 B1**
(45) Date de publication et mention de la délivrance du brevet: **29.07.2020**
(21) Numéro de dépôt: 18191815.2
(22) Date de dépôt: 30.08.2018
(51) Int. Cl.: B60N 2/02, B60N 2/06, B60N 2/42

(54) **GLISSIERE POUR SIEGE DE VEHICULE ET SIEGE DE VEHICULE COMPORTANT UNE TELLE GLISSIERE**
GLEITSCHIENE FÜR FAHRZEUGSITZ, UND FAHRZEUGSITZ, DER EINE SOLCHE GLEITSCHIENE UMFASST
GUIDE FOR VEHICLE SEAT AND VEHICLE SEAT COMPRISING SUCH A GUIDE

(30) Priorité: 15.09.2017 FR 1758571
(43) Date de publication de la demande: 20.03.2019
(73) Titulaire: FAURECIA Sièges d'Automobile, 92000 Nanterre (FR)
(72) Inventeur: PETIT, Fabrice, 61100 St Georges des Groseillers (FR); NARDIN, Vincent, 61100 Flers (FR); FERRE, Ludovic, 61100 Flers (FR)
(74) Mandataire: Plasseraud IP

(56) Documents cités:
- EP-A1- 2 716 492
- EP-A1- 3 012 146
- DE-A1- 10 046 204
- JP-A- 2010 076 553

## Description

### DOMAINE TECHNIQUE

La présente invention est relative aux glissières pour sièges de véhicules et aux et aux sièges de véhicules comportant de telles glissières.

Plus particulièrement, l'invention concerne une glissière pour siège de véhicule comportant des premier et deuxième éléments de glissière montés coulissants l'un par rapport à l'autre selon une direction longitudinale, ladite glissière comportant un mécanisme d'entraînement motorisé adapté pour provoquer un déplacement relatif entre les premier et deuxième éléments de glissière dans la direction longitudinale.

### ARRIERE-PLAN TECHNOLOGIQUE

Le document JP2016215931A décrit un exemple de glissière de ce type. Un inconvénient de telles glissières motorisées est que la résistance mécanique de la glissière en cas d'accident de véhicule est déterminée par la résistance du mécanisme d'entraînement motorisé. Ces considérations peuvent imposer l'usage d'un mécanisme d'entraînement essentiellement métallique, donc lourd, coûteux et pouvant être bruyant lorsqu'il est soumis aux vibrations venant du fonctionnement du véhicule.

Le document JP2010076553A décrit une glissière de siège de véhicule comportant des moyens d'inhibition de mouvement actionnés lors d'un freinage rapide ou un glissement de siège.

### RESUME

La présente invention a notamment pour but de proposer une glissière motorisée de siège de véhicule qui présente une résistance mécanique élevée en cas d'accident du véhicule sans être spécialement lourde, complexe ou coûteuse.

A cet effet, selon un aspect, l'invention propose une glissière pour siège de véhicule comportant des premier et deuxième éléments de glissière montés coulissants l'un par rapport à l'autre selon une direction longitudinale, ladite glissière comportant un mécanisme d'entraînement motorisé adapté pour provoquer un déplacement relatif entre les premier et deuxième éléments de glissière dans la direction longitudinale, ladite glissière comportant en outre :
- au moins un verrou mécanique mobile entre une position déverrouillée où ledit verrou permet aux premier et deuxième éléments de glissière de se déplacer librement l'un par rapport à l'autre dans la direction longitudinale, et une position verrouillée où ledit verrou immobilise les premier et deuxième éléments de glissière l'un par rapport à l'autre, ledit verrou étant normalement maintenu en position déverrouillée,
- et un dispositif de commande de verrou adapté pour détecter des conditions d'accident et, en cas de détection de conditions d'accident, commander le verrou pour le déplacer en position verrouillée,
dans laquelle le mécanisme d'entraînement motorisé comporte une crémaillère solidaire du premier élément de glissière et un dispositif moteur monté sur le deuxième élément de glissière et comprenant un pignon en prise avec la crémaillère, au moins le pignon étant monté mobile par rapport à la crémaillère entre une position d'engagement où ledit pignon est en prise avec la crémaillère et une position de désengagement où ledit pignon est au moins partiellement désengagé de la crémaillère, le pignon étant sollicité élastiquement vers la position d'engagement et étant adapté pour se déplacer de la position de d'engagement à la position de désengagement lorsqu'un des premier et deuxième éléments de glissière est soumis à une force supérieure à un seuil prédéterminé dans la direction longitudinale,
le verrou est monté mobile sur le deuxième élément de glissière,
et le dispositif de commande de verrou est monté sur le deuxième élément de glissière et est actionnable par déplacement du pignon dans la position de désengagement.

Grâce à ces dispositions, la glissière est solidement verrouillée par le verrou en cas de détection de conditions d'accident, et ce indépendamment du dimensionnement et / ou du matériau du mécanisme d'entraînement motorisé (qui peut ainsi être essentiellement en matière plastique) et de la crémaillère, sans que la glissière ne soit spécialement lourde, complexe ou coûteuse.

Dans des modes de réalisation préférés de la glissière selon l'invention, on peut éventuellement avoir recours en outre à l'une et/ou à l'autre des dispositions suivantes :
- le dispositif de commande de verrou comporte une gâchette montée mobile sur le deuxième élément de glissière, le verrou est sollicité élastiquement vers la position verrouillée et est normalement maintenu en position déverrouillée par la gâchette, ladite gâchette étant actionnable par déplacement du pignon dans la position de désengagement pour libérer le verrou ;
- le dispositif de commande de verrou comporte un organe de commande monté mobile sur le deuxième élément de glissière et déplaçable avec le pignon entre la position d'engagement et la position de dégagement, la gâchette est mobile sur le deuxième élément de glissière entre une position de repos où ladite gâchette interdit au verrou de se déplacer en position verrouillée, et une position de libération où ladite gâchette permet au verrou de se déplacer en position verrouillée, ladite gâchette étant sollicité élastiquement vers la position de repos et comportant une came qui est adaptée pour agir sur l'organe de commande de façon à maintenir le pignon en position d'engagement tant qu'un des premier et deuxième éléments de glissière n'est pas soumis à une force supérieure audit seuil prédéterminé dans la direction longitudinale, l'organe de commande étant adapté pour agir sur la came de la gâchette en déplaçant la gâchette en position de libération lorsqu'un des premier et deuxième éléments de glissière est soumis à une force supérieure audit seuil prédéterminé dans la direction longitudinale ;

- la gâchette et l'organe de commande sont montés pivotants sur le deuxième élément de glissière ;
- l'organe de commande est solidaire du dispositif moteur ;
- la gâchette est adaptée pour maintenir le pignon appliqué élastiquement contre la crémaillère lorsque ladite gâchette est en position de repos (on permet ainsi de rattraper les jeux entre le pignon et la crémaillère) ;
- le dispositif de commande de verrou comporte une came de commande de verrou qui est mobile entre une position de déverrouillage où la came de commande de verrou permet au verrou d'être en position déverrouillée et une position de verrouillage où ladite came de commande de verrou repousse le verrou en position verrouillée, la came de commande de verrou étant sollicitée élastiquement vers la position de verrouillage et étant solidaire d'un pion qui, en position de repos de la gâchette, bute contre un bord d'arrêt de la gâchette pour maintenir la came de commande de verrou en position de déverrouillage, le pion n'interférant plus avec ledit bord d'arrêt lorsque la gâchette est en position de libération ;
- la came de commande de verrou est solidaire d'un masque de commande de verrou qui comporte au moins un bord de retenue coopérant avec un relief du verrou pour retenir le verrou en position déverrouillée quand la came de commande de verrou est en position de déverrouillage ;
- le verrou est mobile perpendiculairement à la direction longitudinale et comporte des dents traversant des trous de guidage ménagés dans le deuxième élément de glissière, lesdites dents étant adaptées pour pénétrer dans des trous correspondant ménagés dans le premier élément de glissière.

Par ailleurs l'invention a également pour objet un siège de véhicule comportant deux glissières telles que définie ci-dessus et une assise portée par lesdites glissières. Chaque glissière peut comporter un mécanisme d'entraînement motorisé qui lui est propre, ce qui évite d'encombrer l'espace sous l'assise avec un moteur et des moyens de transmission mécanique.

### BREVE DESCRIPTION DES DESSINS

D'autres caractéristiques et avantages de l'invention apparaîtront au cours de la description suivante d'une de ses formes de réalisation, donnée à titre d'exemple non limitatif, en regard des dessins joints.

Sur les dessins :
- les figures 1 et 2 sont des vues schématiques, respectivement de côté et de face, d'un siège pouvant inclure des glissières selon l'invention,
- les figures 3 et 4 sont des vues en perspective de l'une des glissières du siège des figures 1 et 2, vue dans deux directions,
- la figure 5 est une vue agrandie partielle du profilé fixe de la glissière,
- la figure 6 est une vue de détail de la figure 4, en position normale d'utilisation,
- les figures 7 et 8 sont des vues en perspectives du profilé mobile de la glissière en position normale d'utilisation, vu dans deux directions,
- la figure 9 est une vue de détail de la figure 7, sans le dispositif moteur,
- la figure 10 est une vue similaire à la figure 9, sans l'organe de commande,
- la figure 11 est une vue de détail montrant le profilé mobile du côté opposé à l'organe de commande,
- la figure 12 est une vue de détail de la figure 10, sans le cache qui recouvre normalement les verrous,
- la figure 13 est une vue de détail montrant les verrous seuls,
- la figure 14 est une vue similaire à la figure 6, en position d'actionnement des verrous en cas d'accident,
- la figure 15 est une vue similaire à la figure 14, sans le profilé fixe et sans le dispositif moteur,
- la figure 16 est une vue de détail similaire à la figure 15, sans l'organe de commande et le ressort de gâchette, et
- la figure 17 est une vue de détail similaire à la figure 16, sans le cache qui recouvre normalement les verrous.

### DESCRIPTION PLUS DETAILLEE

Sur les différentes figures, les mêmes références désignent des éléments identiques ou similaires.

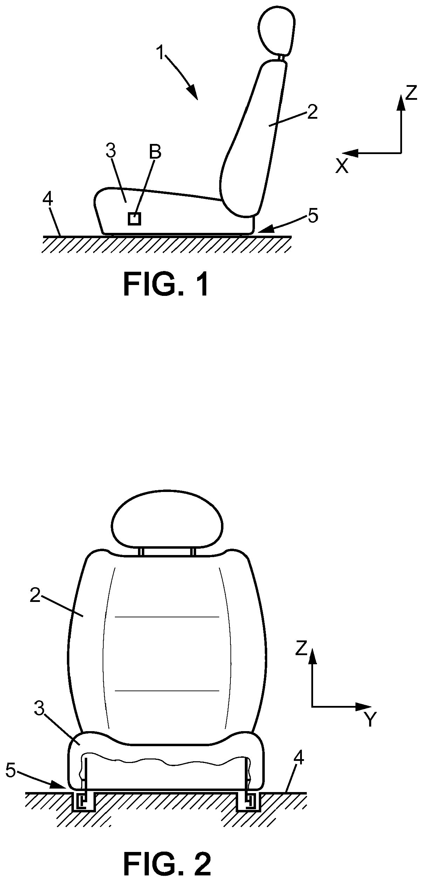

Les figures 1 et 2 représentent un siège de véhicule automobile 1 qui comprend un dossier 2 porté par une assise 3 elle-même montée coulissante sur le plancher 4 du véhicule, dans une direction longitudinale X sensiblement horizontale.

L'assise 3 est reliée au plancher 4 par deux glissières parallèles 5, s'étendant dans la direction longitudinale X.

Chacune des glissières 5 comporte un mécanisme d'entraînement motorisé électrique qui sera décrit ci-après, les mécanismes des deux glissières 5 étant commandés en synchronisme par une unité centrale électronique (par exemple, microcontrôleur ou similaire) en fonction commandes reçues notamment d'un bouton de commande bidirectionnel B ou similaire actionnable par un utilisateur.

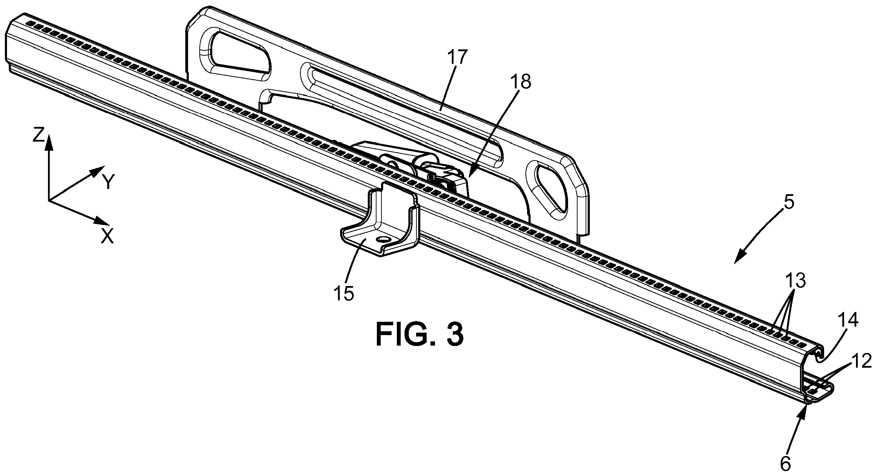

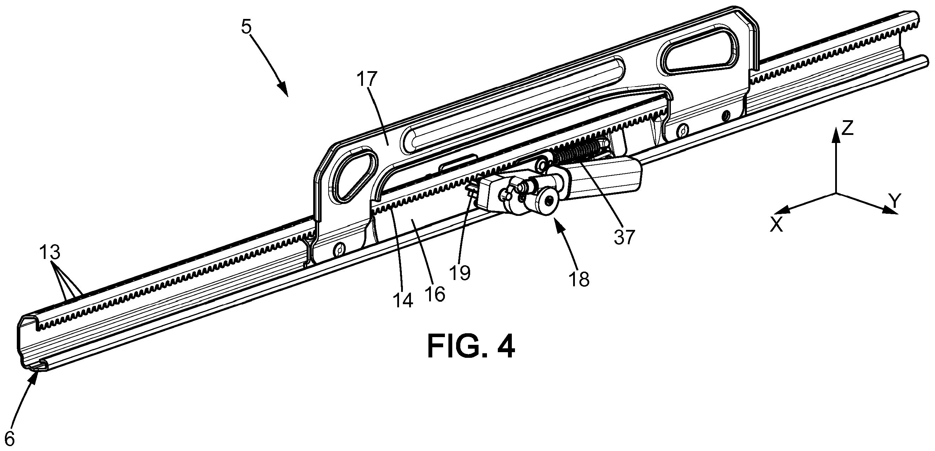

Comme représenté sur les figures 3 à 6, chaque glissière 5 comporte des premier et deuxième éléments de glissière 6, 16 montés coulissants l'un par rapport à l'autre selon la direction longitudinale X. Ces premier et deuxième éléments de glissières sont reliés l'un au plancher 4 du véhicule, l'autre à l'assise 3. Dans l'exemple représenté, le premier élément de glissière 6 est solidaire du plancher 4 et le deuxième élément de glissière 16 est solidaire de l'assise, mais l'inverse serait possible.

Le premier élément de glissière 6 peut être généralement un profilé, par exemple métallique. Le deuxième élément de glissière 16 peut également être un profilé, notamment métallique.

Pour plus de simplicité, les premier et deuxième éléments de glissières 6, 16 seront appelés respectivement profilé fixe 6 et profilé mobile 16 dans la suite de la description, sans que ces appellation soient limitatives de l'invention.

Le mécanisme d'entraînement motorisé peut comporter par exemple une crémaillère 14 solidaire du profilé fixe 6 et un dispositif moteur 18 monté sur le profilé mobile 16. Le dispositif moteur 18 peut être par exemple un motoréducteur ou similaire, comportant un pignon 19 en prise avec la crémaillère 14.

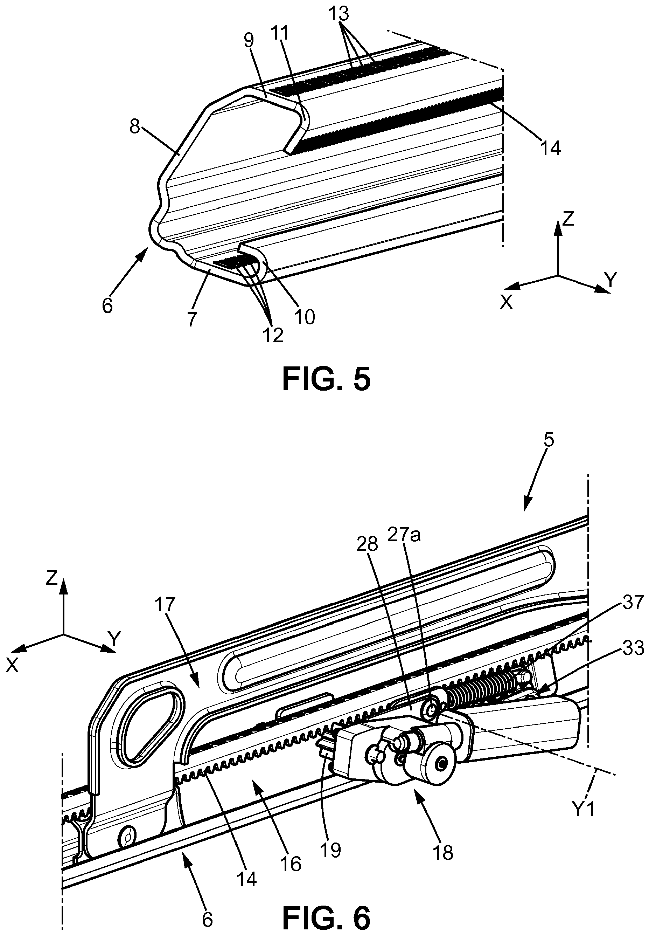

Comme représenté plus en détail sur la figure 5 le profilé fixe 6 de chaque glissière 5 peut par exemple présenter une forme de C ouverte horizontalement vers l'autre glissière 5 du siège.

Le profilé fixe 6 peut comporter par exemple :
- une aile inférieure 7 s'étendant sensiblement horizontalement parallèlement à la direction longitudinale X et à une direction horizontale transversale Y perpendiculaire à la direction longitudinale X,
- une âme 8 s'étendant vers le haut (parallèlement à la direction longitudinale X et sensiblement selon une direction verticale Z) à partir du bord extérieur de l'aile inférieure,
- et une aile supérieure 9 s'étendant sensiblement horizontalement à l'aile inférieure 7 à partir du bord supérieur de l'âme 8.

Le bord libre de l'aile inférieure 7 peut comporter un retour 10 rabattu par exemple sensiblement à 180 degrés et formant une gorge intérieure.

Le bord libre de l'aile supérieure 9 peut comporter un retour 11 s'étendant vers le bas.

L'aile inférieure 7 peut comporter des indentations, par exemple des trous 12, alignées selon la direction longitudinale X avec un pas régulier.

L'aile supérieure 8 peut comporter des indentations, par exemple des trous 13, alignées selon la direction longitudinale X avec un pas régulier.

Le retour 11 de l'aile supérieure peut présenter un bord libre inférieur découpé pour former la crémaillère 14.

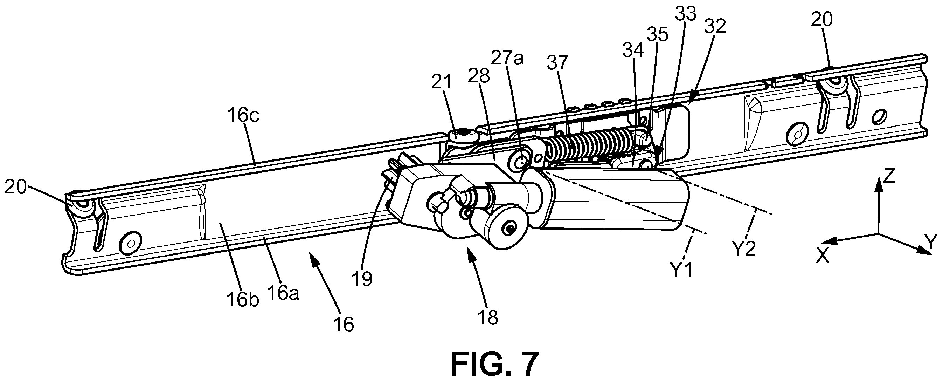

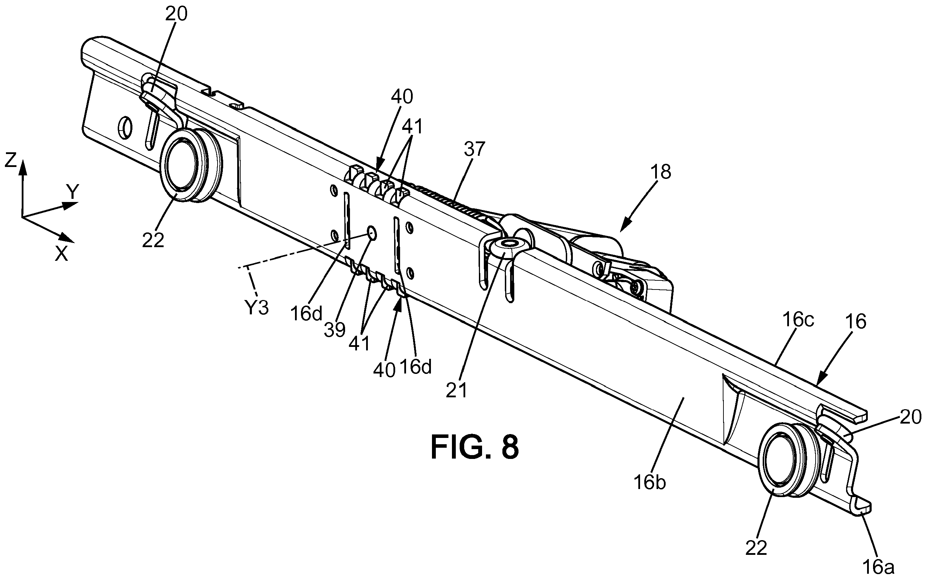

Comme représenté sur les figures 7 et 8, le profilé mobile 16 peut comporter une âme verticale 16b adjacente à l'âme 8 du profilé fixe, une aile inférieure 16a disposée au-dessus de l'aile inférieure 7 du profilé fixe et une aile supérieure 16c disposée au-dessous de l'aile supérieure 9 du profilé fixe.

Le profilé mobile 16 peut comporter des galets 20, 21, 22 roulant sur la surface intérieure du profilé fixe 6 pour permettre le coulissement longitudinal du profilé mobile 16.

La glissière 5 comporte en outre :
- au moins un verrou mécanique 40 mobile entre une position déverrouillée où ledit verrou 40 permet au profilé mobile 16 de coulisser librement dans la direction longitudinale X, et une position verrouillée où ledit verrou 40 immobilise les premier et deuxième éléments de glissière l'un par rapport à l'autre, ledit verrou 40 étant normalement maintenu en position déverrouillée,
- et un dispositif de commande de verrou adapté pour détecter des conditions d'accident et, en cas de détection de conditions d'accident, commander le verrou pour le déplacer en position verrouillée.

Le verrou 40 peut être monté mobile sur le profilé mobile 16 perpendiculairement à la direction longitudinale X, par exemple selon la direction verticale Z.

Eventuellement, le profilé mobile 16 peut comporter deux verrous 40 disposés respectivement vers les ailes supérieure 16c et inférieure 16a du profilé mobile.

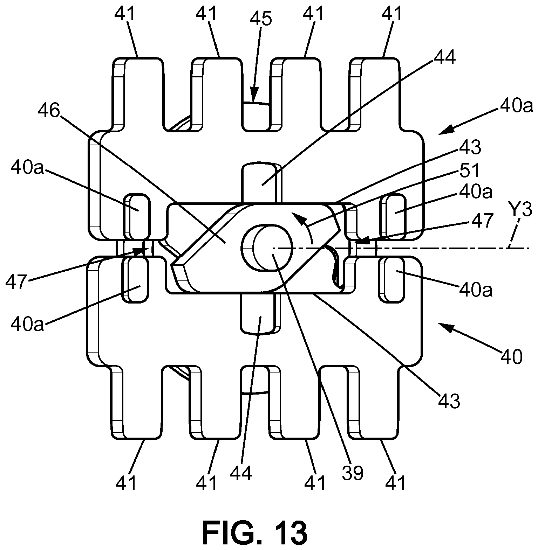

Comme représenté sur les figures 7, 8, 11-13, chaque verrou 40 peut comporter des dents 41 traversant des trous de guidage 42 ménagés respectivement dans les ailes supérieure 16c et inférieure 16a du profilé mobile. Les dents 41 des verrous sont alignées selon la direction longitudinale X avec le même pas que les trous 12, 13 des ailes 7, 9 du profilé fixe 6, de sorte que ces dents 41 sont adaptées pour pénétrer dans les trous correspondant 12, 13 en position verrouillée de chaque verrou 40.

Le dispositif de commande de verrou peut être adapté pour détecter des conditions d'accident par tous moyens connus, soit par des moyens électroniques (accéléromètre, caméras embarquées surveillant l'environnement du véhicule, ou autres), soit par des moyens mécaniques. Dans l'exemple représenté, les moyens pour détecter des conditions d'accident sont purement mécaniques : le pignon 19 est monté mobile par rapport à la crémaillère 14 entre une position d'engagement où ledit pignon 19 est en prise avec la crémaillère 14 et une position de désengagement où ledit pignon 19 est au moins partiellement désengagé de la crémaillère 14, le pignon 19 étant sollicité élastiquement vers la position d'engagement. Le pignon 19 est adapté pour se déplacer de la position de d'engagement à la position de désengagement lorsque le profilé mobile 16 subit une force supérieure à un seuil prédéterminé dans la direction longitudinale X. Par exemple, le seuil en question peut être compris entre 0,7 kN et 5 kN. La tendance au désengagement au moins partiel du pignon 19 se produit classiquement, du fait que la tangente commune à une dent du pignon 19 et à la dent de la crémaillère 14 avec laquelle elle est en contact, n'est pas perpendiculaire à la direction longitudinale.

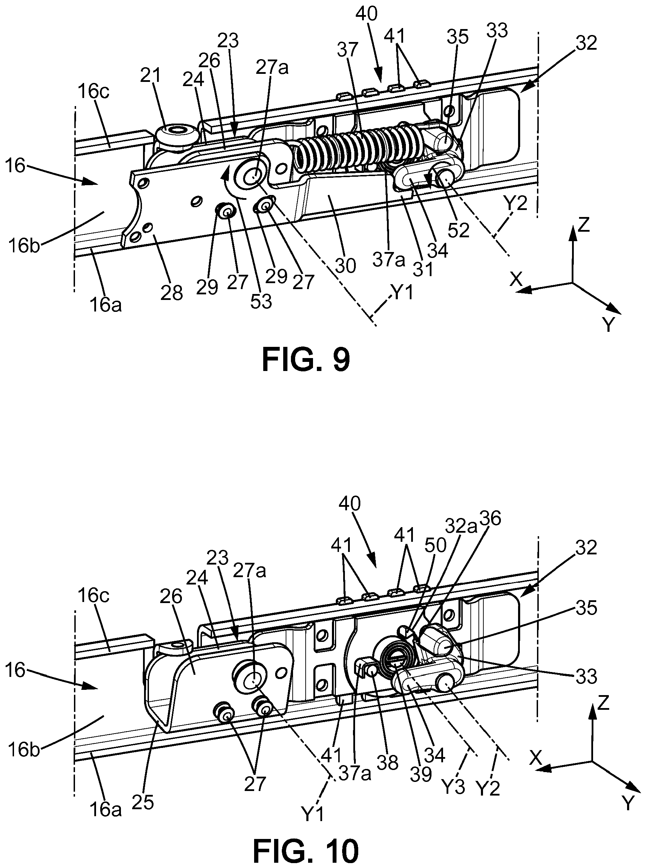

Dans l'exemple particulier représenté sur les dessins, le pignon 19 est déplaçable avec l'ensemble du dispositif moteur 18 par rapport à la crémaillère 14. Par exemple, comme représenté sur les figures 7 et 9, le dispositif moteur 18 peut être monté sur un organe de commande 28 qui est monté pivotant par rapport au profilé mobile 16 autour d'un axe de pivotement Y1 sensiblement parallèle à la direction transversale Y. Plus spécialement, l'organe de commande 28 peut se présenter sous forme d'une plaque de tôle s'étendant sensiblement dans le plan X, Z et montée pivotante sur un support 23 solidaire du profilé mobile 16. Le support 23 peut éventuellement comporter une tôle pliée sensiblement en forme de U ouverte vers le haut, avec une aile 24 fixée à l'âme 16b du profilé mobile, un fond 25 et une aile 26 portant l'organe de commande 28. L'organe de commande 28 peut être monté sur l'aile 26 par un pivot 27a. L'organe de commande 28 peut en outre le cas échéant être guidé par exemple par des pions 27 solidaires de l'aile 26 et coulissants dans des trous oblongs 29 de l'organe de commande, les trous oblongs 29 étant formés en arcs de cercles centrés sur l'axe de pivotement Y1. L'organe de commande 28 peut comporter un bras 30 s'étendant vers le ou les verrous 40, terminé par un doigt d'actionnement 31 qui commande une gâchette 33 commandant le ou les verrous 40.

La gâchette 33 est montée mobile sur le deuxième élément de glissière 16, et peut être une pièce métallique moulée, frittée, formée à froid ou autre. En particulier, la gâchette 33 peut être montée pivotante autour d'un axe de pivotement Y2 sensiblement perpendiculaire à l'âme 16b du profilé mobile. Notamment, la gâchette peut être montée pivotante sur un cache 32, par exemple une pièce de tôle, qui maintient le ou les verrous 40 parallèles à l'âme 16b du profilé mobile et qui est fixé audit profilé mobile.

La gâchette 33 peut comporter une came 34 en forme de doigt orienté vers l'organe de commande 28 et en contact avec un bord supérieur du doigt d'actionnement 31 de l'organe de commande. La came 34 est maintenue en appui élastique contre le doigt d'actionnement 31 par au moins un ressort 37 qui sollicite la gâchette 33 dans le sens angulaire 52 (figure 9). Le ressort 37 peut par exemple être un ressort hélicoïdal accroché d'une part sur le support 23 susmentionné et d'autre part sur un doigt 35 de la gâchette. Du fait de la sollicitation élastique du ressort 37, la came de la gâchette exerce sur l'organe de commande 28 un effort qui tend à le faire pivoter dans le sens angulaire 53 (figure 9) et à maintenir le pignon 19 appliqué élastiquement contre la crémaillère, avec une force élastique qui peut être par exemple comprise entre 100 et 500 N.
De cette façon, non seulement on assure la fonction de commande du ou des verrous 40 comme il sera expliqué ci-après, mais encore on rattrape les jeux entre le pignon 19 et la crémaillère 14.

Comme représenté plus en détails sur les figures 10 à 13, le ou les verrous 40 sont sollicités élastiquement vers la position verrouillée et sont normalement maintenus en position déverrouillée par la gâchette 33.

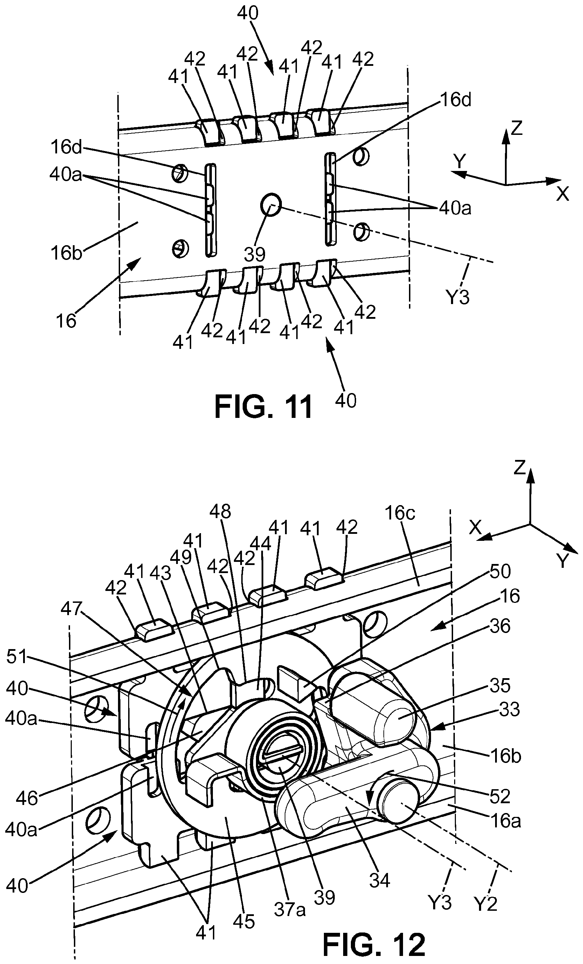

Plus particulièrement, le ou les verrous 40 peuvent être sollicités élastiquement vers la position verrouillée par une came de commande de verrou 46, par exemple constituée par une pièce de tôle découpée, qui peut être montée pivotante par rapport au profilé mobile 16 autour d'un axe de pivotement Y3 parallèle à l'axe Y2. La came 46 peut par exemple être solidaire d'un arbre 39 tourillonnant sr l'âme 16b du profilé mobile et sur le cache 32. La came de commande de verrou 46 est normalement maintenue par la gâchette 33 dans la position de verrouillage visible sur les figures 10 et 12, où la came de commande de verrou 46 permet au verrou ou aux verrous 40 d'être en position déverrouillée.

La came de commande de verrou 46 est sollicitée élastiquement dans le sens angulaire 51 (figures 12-13) vers une position de verrouillage où ladite came de commande de verrou 46 repousse le ou les verrous en position verrouillée. La came de commande de verrou 46 est en appui élastique contre un bord intérieur 43 du ou de chaque verrou 40, à l'opposé des dents 41. Le ou les verrous 40 peuvent éventuellement comporter des pions 40a, par exemple formés par des semi-découpes, qui coulissent dans des fentes verticales 16d de l'âme 16b du profilé mobile, pour améliorer le guidage du ou des verrous entre leur position déverrouillée et leur position déverrouillée.

La sollicitation élastique appliquée à la came de commande de verrou 46 peut être procurée par exemple par un ressort spiral dont une extrémité est accrochée par exemple sur un pion 38 solidaire du cache 32 et dont l'autre extrémité est solidaire de l'arbre 39 susmentionné.

Lorsque la gâchette 33 est maintenue par le ressort 37 dans la position de repos des figures 10 et 12, elle maintient la came de commande de verrou 46 en position de déverrouillage par butée d'un pion 50 solidaire de la came de commande de verrou 46, contre un bord d'arrêt 36 appartenant à la gâchette. Le pion 50 peut traverser un trou oblong 32a ménagé dans le cache 32, en forme d'arc de cercle centré sur l'axe de pivotement Y3.

Plus particulièrement, le pion 50 peut appartenir à un masque de commande 45 solidaire de la came de commande de verrou 46. Le masque de commande 45 peut être une pièce de tôle découpée, interposée entre la came de commande de verrou 46 et le cache 32. Le masque de commande 45 maintient positivement le ou les verrous 40 en position déverrouillée lorsque la came de commande de verrou 46 est en position de déverrouillage. A cet effet, le ou chaque verrou 40 peut comporter un pion 44 qui est engagé dans une découpe correspondante 47 du masque de commande qui comporte une partie étroite 48 et une partie élargie 49 : lorsque la came de commande de verrou 46 est en position de déverrouillage, le pion 44 se trouve dans la partie étroite 48 de la découpe, dont le bord extérieur retient le verrou en position déverrouillée.

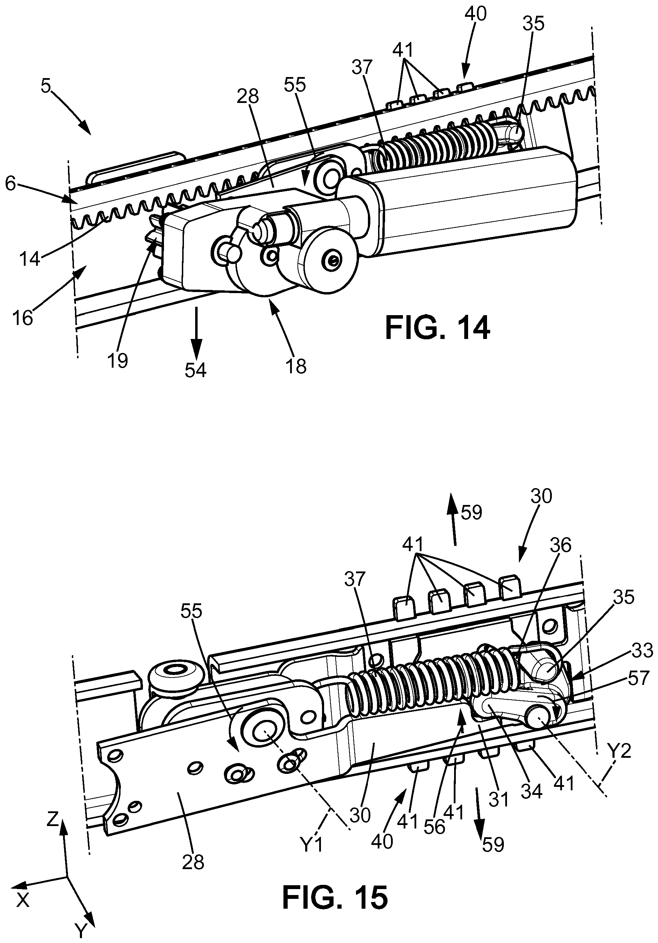

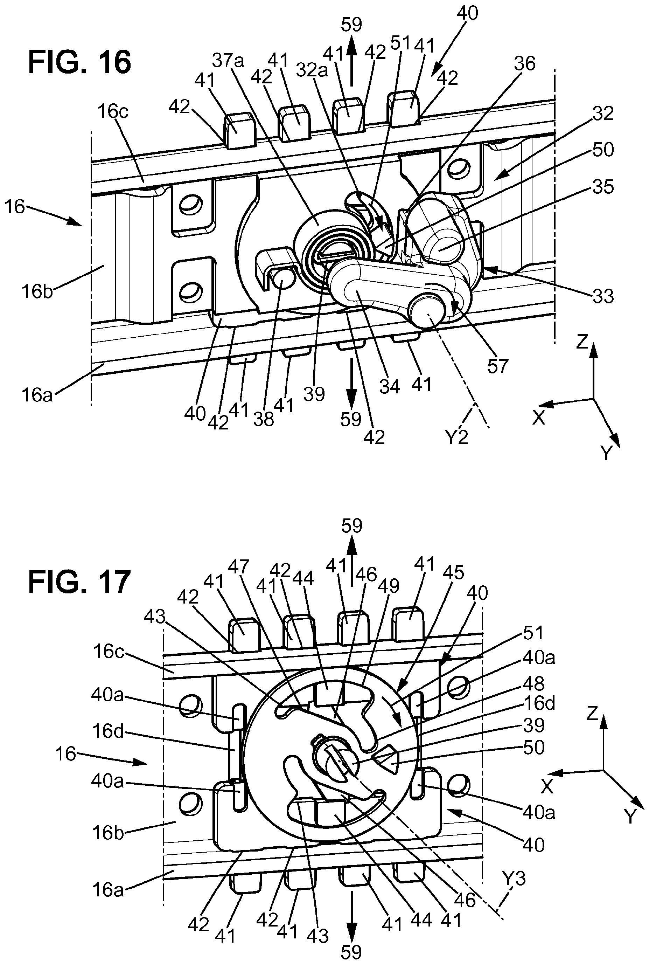

Comme représenté sur les figures 14 à 17, lorsque le véhicule dans lequel est installé le siège subit un accident notamment par choc frontal, le choc génère une force exercée sur le profilé mobile 16, supérieur au seuil prédéterminé susmentionné, de sorte que le pignon 19 se désengage au moins partiellement de la crémaillère 14 (figure 14). Ce désengagement fait pivoter l'organe de commande 28 dans le sens angulaire 55, de sorte que le doigt d'actionnement 33 se déplace vers le haut dans la direction 56 (figure 15) en entraînant la gâchette 33 par sa came 34. La gâchette 33 pivote donc dans le sens angulaire 57 contre la sollicitation élastique du ressort 37, jusqu'à une position de libération où le pion 50 n'interfère plus avec ledit bord d'arrêt 36 de la gâchette. La came de commande de verrou 46 est ainsi libérée et se déplace en position de verrouillage dans le sens angulaire 51 (figures 16, 17). Au cours de ce mouvement, la partie élargie 49 de chaque découpe du masque de commande vient en face du pion 44 du verrou correspondant, de sorte que la came 46 peut déplacer le ou les verrous 40 en position verrouillée dans le sens 59. Le profilé mobile 16 est alors solidement ancré sur le profilé fixe 6 de la glissière, indépendamment de la résistance mécanique du dispositif moteur 18 et / ou de la crémaillère 14.

Le mode de commande du ou des verrous 40 décrit ci-dessus n'est pas limitatif, on pourra notamment utiliser des moyens de commande connus permettant un verrouillage des verrous sensiblement indépendant de la position relative du profilé mobile 16 par rapport au profilé fixe 6 au moment du choc.

On notera que l'espace sous l'assise 3 du siège n'est encombré d'aucun moteur entre les glissières 5 pour la commande des glissières, ce qui permet soit de mettre à profit cet espace libre, soit de surbaisser le siège 1 par rapport au plancher 4 du véhicule.

## Revendications

1. Glissière (5) pour siège de véhicule comportant des premier et deuxième éléments de glissière (6, 16) montés coulissants l'un par rapport à l'autre selon une direction longitudinale (X), ladite glissière comportant un mécanisme d'entraînement motorisé (18, 14) adapté pour provoquer un déplacement relatif entre les premier et deuxième éléments de glissière (6, 16) dans la direction longitudinale,
ladite glissière comportant en outre :
- au moins un verrou mécanique (40) mobile entre une position déverrouillée où ledit verrou (40) permet aux premier et deuxième éléments de glissière (6, 16) de se déplacer librement l'un par rapport à l'autre dans la direction longitudinale, et une position verrouillée où ledit verrou (40) immobilise les premier et deuxième éléments de glissière (6, 16) l'un par rapport à l'autre, ledit verrou (40) étant normalement maintenu en position déverrouillée,
- et un dispositif (28, 33, 37a, 45, 46) de commande de verrou adapté pour détecter des conditions d'accident et, en cas de détection de conditions d'accident, commander le verrou (40) pour le déplacer en position verrouillée,
**caractérisée en ce que** :
- le mécanisme d'entraînement motorisé (18, 14) comporte une crémaillère (14) solidaire du premier élément de glissière (6) et un dispositif moteur (18) monté sur le deuxième élément de glissière (16) et comprenant un pignon (19) en prise avec la crémaillère (14), au moins le pignon étant monté mobile par rapport à la crémaillère entre une position d'engagement où ledit pignon (19) est en prise avec la crémaillère (14) et une position de désengagement où ledit pignon (19) est au moins partiellement désengagé de la crémaillère (14), le pignon (19) étant sollicité élastiquement vers la position d'engagement et étant adapté pour se déplacer de la position de d'engagement à la position de désengagement lorsqu'un des premier et deuxième éléments de glissière (6, 16) est soumis à une force supérieure à un seuil prédéterminé dans la direction longitudinale,
- le verrou (40) est monté mobile sur le deuxième élément de glissière (16),
- et le dispositif (28, 33, 37a, 45, 46) de commande de verrou est monté sur le deuxième élément de glissière (16) et est actionnable par déplacement du pignon (19) dans la position de désengagement.

2. Glissière (5) selon la revendication 1, dans laquelle le dispositif (28, 33, 37a, 45, 46) de commande de verrou comporte une gâchette (33) montée mobile sur le deuxième élément de glissière (16), le verrou (40) est sollicité élastiquement vers la position verrouillée et est normalement maintenu en position déverrouillée par la gâchette (33), ladite gâchette (33) étant actionnable par déplacement du pignon (19) dans la position de désengagement pour libérer le verrou (40).

3. Glissière (5) selon la revendication 2, dans laquelle le dispositif (28, 33, 37a, 45, 46) de commande de verrou comporte un organe de commande (28) monté mobile sur le deuxième élément de glissière (16) et déplaçable avec le pignon (19) entre la position d'engagement et la position de dégagement, la gâchette (33) est mobile sur le deuxième élément de glissière (16) entre une position de repos où ladite gâchette (33) interdit au verrou (40) de se déplacer en position verrouillée, et une position de libération où ladite gâchette (33) permet au verrou (40) de se déplacer en position verrouillée, ladite gâchette (33) étant sollicité élastiquement vers la position de repos et comportant une came (34) qui est adaptée pour agir sur l'organe de commande (28) de façon à maintenir le pignon (19) en position d'engagement tant qu'un des premier et deuxième éléments de glissière (6, 16) n'est pas soumis à une force supérieure audit seuil prédéterminé dans la direction longitudinale (X), l'organe de commande (28) étant adapté pour agir sur la came (34) de la gâchette en déplaçant la gâchette (33) en position de libération lorsqu'un des premier et deuxième éléments de glissière (6, 16) est soumis à une force supérieure audit seuil prédéterminé dans la direction longitudinale .

4. Glissière (5) selon la revendication 3, dans laquelle la gâchette (33) et l'organe de commande (28) sont montés pivotants sur le deuxième élément de glissière (16).

5. Glissière (5) selon la revendication 3 ou la revendication 4, dans laquelle l'organe de commande (28) est solidaire du dispositif moteur (18).

6. Glissière (5) selon l'une quelconque des revendications 3 à 5, dans laquelle la gâchette (33) est adaptée pour maintenir le pignon (19) appliqué élastiquement contre la crémaillère (14) lorsque ladite gâchette (33) est en position de repos.

7. Glissière (5) selon l'une quelconque des revendications 3 à 6, dans laquelle le dispositif (28, 33, 37a, 45, 46) de commande de verrou comporte une came (46) de commande de verrou qui est mobile entre une position de déverrouillage où la came (46) de commande de verrou permet au verrou (40) d'être en position déverrouillée et une position de verrouillage où ladite came (46) de commande de verrou repousse le verrou (40) en position verrouillée, la came (46) de commande de verrou étant sollicitée élastiquement vers la position de verrouillage et étant solidaire d'un pion (50) qui, en position de repos de la gâchette (33), bute contre un bord d'arrêt (36) de la gâchette pour maintenir la came (46) de commande de verrou en position de déverrouillage, le pion (50) n'interférant plus avec ledit bord d'arrêt (36) lorsque la gâchette (33) est en position de libération.

8. Glissière (5) selon la revendication 7, dans laquelle la came (46) de commande de verrou est solidaire d'un masque (45) de commande de verrou qui comporte au moins un bord de retenue (48) coopérant avec un relief (44) du verrou pour retenir le verrou (40) en position déverrouillée quand la came de commande de verrou est en position de déverrouillage.

9. Siège de véhicule comportant deux glissières (5) selon l'une quelconque des revendications précédentes et une assise (3) portée par lesdites glissières.

10. Siège selon la revendication 9, dans lequel chaque glissière (5) comporte un mécanisme d'entraînement motorisé (14, 18).

## Patentansprüche

1. Gleitschiene (5) für Fahrzeugsitz, aufweisend ein erstes und zweites Gleitschienenelement (6, 16), die angebracht sind, um in einer Längsrichtung (X) relativ zueinander gleitbar zu sein, wobei die Gleitschiene einen motorisierten Antriebsmechanismus (18, 14) aufweist, der angepasst ist, um eine relative Verschiebung zwischen dem ersten und zweiten Gleitschienenelement (6, 16) in der Längsrichtung zu bewirken,
wobei die Gleitschiene ferner aufweist:
- mindestens einen mechanischen Riegel (40), der mobil ist zwischen einer entriegelten Position, in der der Riegel dem ersten und zweiten Gleitschienenelement (6, 16) erlaubt, sich frei in der Längsrichtung relativ zueinander zu verschieben, und einer verriegelten Position, in der der Riegel (40) das erste und zweite Gleitschienenelement (6, 16) relativ zueinander blockiert, wobei der Riegel (40) normalerweise in der entriegelten Position gehalten wird,
- und eine Riegelsteuerungsvorrichtung (28, 33, 37a, 45, 46) zur Steuerung des Riegels, die angepasst ist, Unfallbedingungen zu detektieren und, im Fall einer Detektion von Unfallbedingungen, den Riegel (40) zu steuern, sich in die verriegelte Position zu verschieben,
**dadurch gekennzeichnet, dass**:
- der motorisierte Antriebsmechanismus (18, 14) eine mit dem ersten Gleitschienenelement (6) fest verbundene Zahnstange (14) und eine an dem zweiten Gleitschienenelement (16) angebrachte Motorvorrichtung (18) mit einem Ritzel (19) im Eingriff mit der Zahnstange (14) aufweist, wobei zumindest das Ritzel mobil bezüglich der Zahnstange angebracht ist und bewegbar ist zwischen einer Koppelungsposition, in der das Ritzel (19) mit der Zahnstange (14) gekoppelt ist, und einer Entkopplungsposition, in der das Ritzel (19) von der Zahnstange (14) mindestens teilweise entkoppelt ist, wobei das Ritzel (19) zu der Kopplungsposition hin elastisch vorgespannt ist und angepasst ist, sich von der Kopplungsposition in die Entkopplungsposition zu bewegen, wenn eines der Gleitschienenelemente (6, 16) in der Längsrichtung einer Kraft ausgesetzt ist, die eine vorgegebene Schwelle überschreitet,
- der Riegel (40) mobil an dem zweiten Gleitschienenelement (16) angebracht ist,
- und die Riegelsteuerungsvorrichtung (28, 33, 37a, 45, 46) an dem zweiten Gleitschienenelement (16) angebracht ist und durch Verschiebung des Ritzels (19) in die Entkopplungsposition betätigbar ist.

2. Gleitschiene (5) nach Anspruch 1, in welcher die Riegelsteuerungsvorrichtung (28, 33, 37a, 45, 46) einen an dem zweiten Gleitschienenelement (16) mobil angebrachten Drücker (33) aufweist, wobei der Riegel (40) zur verriegelten Position hin elastisch vorgespannt ist und normalerweise von dem Drücker (33) in der entriegelten Position gehalten wird, wobei der Drücker (33) durch Verschiebung des Ritzels (19) in die Entkopplungsposition betätigbar ist, um den Riegel (40) freizugeben.

3. Gleitschiene (5) nach Anspruch 2, in welcher die Riegelsteuerungsvorrichtung (28, 33, 37a, 45, 46) ein Steuerungsglied (28) aufweist, das an dem zweiten Gleitschienenelement (16) mobil angebracht ist und mit dem Ritzel (19) zwischen der Kopplungsposition und der Entkopplungsposition verschiebbar ist, der Drücker (33) an dem zweiten Gleitschienenelement (16) mobil ist zwischen einer Ruheposition, in der der Drücker (33) dem Riegel (40) verbietet, sich in die verriegelte Position zu verschieben, und einer Freigabeposition, in der der Drücker (33) dem Riegel (40) erlaubt, sich in die verriegelte Position zu verschieben, wobei der Drücker (33) zur Ruheposition hin elastisch vorgespannt ist und einen Nocken (34) aufweist, der angepasst ist, auf das Steuerungsglied (28) zu wirken, um das Ritzel (19) in der Kopplungsposition zu halten, solange nicht eines von dem ersten und zweiten Gleitschienenelement (6, 16) in der Längsrichtung (X) einer Kraft ausgesetzt ist, die eine vorgegebene Schwelle überschreitet, wobei das Steuerungsglied (28) angepasst ist, auf den Nocken (34) des Drückers zu wirken, um den Drücker (33) in die Freigabeposition zu verschieben, wenn eines von dem ersten und zweiten Gleitschienenelement (6, 16) in der Längsrichtung einer Kraft ausgesetzt ist, die eine vorgegebene Schwelle überschreitet.

4. Gleitschiene (5) nach Anspruch 3, in welcher der Drücker (33) und das Steuerungsglied (28) an dem zweiten Gleitschienenelement (16) drehbar angebracht sind.

5. Gleitschiene (5) nach Anspruch 3 oder Anspruch 4, in welcher das Steuerungsglied mit der Motorvorrichtung (18) fest verbunden ist.

6. Gleitschiene (5) nach einem der Ansprüche 3 bis 5, in welcher der Drücker (33) angepasst ist, um das Ritzel (19) gegen die Zahnstange elastisch angelegt zu halten, wenn der Drücker (33) in der Ruheposition ist.

7. Gleitschiene (5) nach einem der Ansprüche 3 bis 6, in welcher die Riegelsteuerungsvorrichtung (28, 33, 37a, 45, 46) einen Riegelsteuerungsnocken (46) aufweist, der mobil ist zwischen einer Entriegelungsposition, in der der Riegelsteuerungsnocken (46) dem Riegel (40) erlaubt, in der entriegelten Position zu sein, und einer Verriegelungsposition, in der Riegelsteuerungsnocken (46) den Riegel (40) in die verriegelte Position stößt, wobei der Riegelsteuerungsnocken (46) zu der Verriegelungsposition hin elastisch vorgespannt ist und mit einem Klotz (50) fest verbunden ist, der in der Ruheposition des Drückers (33) gegen eine Anschlagkante (36) des Drückers anschlägt, um den Riegelsteuerungsnocken (46) in der Entriegelungsposition zu halten, wobei der Klotz (50) die Anschlagkante (36) nicht mehr behindert, wenn der Drücker (33) in der Freigabeposition ist.

8. Gleitschiene (5) nach Anspruch 7, in welcher der Riegelsteuerungsnocken (46) mit einer Riegelsteuerungsmaske (45) fest verbunden ist, die mindestens eine Rückhaltekante (48) aufweist, die mit einem Riegelrelief (44) zusammenarbeitet, um den Riegel (40) in der entriegelten Position zu halten, wenn der Riegelsteuerungsnocken in der Entriegelungsposition ist.

9. Fahrzeugsitz aufweisend zwei Gleitschienen (5) nach einem der vorstehenden Ansprüche und eine von den Gleitschienen getragene Sitzfläche (3).

10. Sitz nach Anspruch 9, in welchem jede Gleitschiene (5) einen motorisierten Antriebsmechanismus (14, 18) aufweist.

## Claims

1. Rail (5) for a vehicle seat, comprising first and second rail members (6, 16) mounted so as to slide in relation to one another along a longitudinal direction (X), said rail comprising a motorized drive mechanism (18, 14) able to cause relative movement between the first and second rail members (6, 16) along the longitudinal direction,
said rail further comprising:
- at least one mechanical latch (40) that is movable between an unlocked position where said latch (40) allows the first and second rail members (6, 16) to move freely in relation to one another along the longitudinal direction, and a locked position where said latch (40) immobilizes the first and second rail members (6, 16) in relation to one another, said latch (40) normally being held in the unlocked position,
- and a latch control device (28, 33, 37a, 45, 46) able to detect accident conditions and, if accident conditions are detected, to control the latch (40) so as to move it to the locked position.
**characterized in that**
- the motorized drive mechanism (18, 14) comprises a rack (14) integral with the first rail member (6) and a motor device (18) mounted on the second rail member (16) and comprising a pinion (19) engaged with the rack (14), at least the pinion being mounted so as to be movable in relation to the rack between an engagement position where said pinion (19) is engaged with the rack (14) and a disengagement position where said pinion (19) is at least partially disengaged from the rack (14), the pinion (19) being resiliently biased towards the engagement position and able to move from the engagement position to the disengagement position when one of the first and second rail members (6, 16) is subjected to a force greater than a predetermined threshold along the longitudinal direction,
- the latch (40) is movably mounted on the second rail member (16),
- and the latch control device (28, 33, 37a, 45, 46) is mounted on the second rail member (16) and can be actuated by movement of the pinion (19) into the disengagement position.

2. Rail (5) according to claim 1, wherein the latch control device (28, 33, 37a, 45, 46) comprises a trigger (33) movably mounted on the second rail member (16), the latch (40) being resiliently biased towards the locked position and normally held in the unlocked position by the trigger (33), said trigger (33) being actuated by movement of the pinion (19) to the disengagement position so as to release the latch (40).

3. Rail (5) according to claim 2, wherein the latch control device (28, 33, 37a, 45, 46) comprises a control member (28) movably mounted on the second rail member (16) and movable with the pinion (19) between the engagement position and the disengagement position, the trigger (33) being movable on the second rail member (16) between a rest position where said trigger (33) prevents the latch (40) from moving to the locked position, and a release position wherein said trigger (33) allows the latch (40) to move to the locked position, said trigger (33) being resiliently biased towards the rest position and comprising a cam (34) able to act on the control member (28) so as to maintain the pinion (19) in the engagement position as long as one among the first and second rail members (6, 16) is not subjected to a force exceeding said predetermined threshold along the longitudinal direction (X), the control member (28) being able to act on the cam (34) of the trigger to move the trigger (33) to the release position when one among the first and second rail members (6, 16) is subjected to a force greater than said predetermined threshold along the longitudinal direction.

4. Rail (5) according to claim 3, wherein the trigger (33) and the control member (28) are pivotally mounted on the second rail member (16).

5. Rail (5) according to claim 3 or claim 4, wherein the control member (28) is integral with the motor device (18).

6. Rail (5) according to any one of claims 3 to 5, wherein the trigger (33) is able to keep the pinion (19) resiliently applied against the rack (14) when said trigger (33) is in the rest position.

7. Rail (5) according to any of claims 3 to 6, wherein the latch control device (28, 33, 37a, 45, 46) comprises a latch control cam (46) which is movable between an unlocking position where the latch control cam (46) allows the latch (40) to be in the unlocked position and a locking position where said latch control cam (46) pushes the latch (40) back to the locked position, the latch control cam (46) being resiliently biased towards the locking position and being integral with a pin (50) which, in the rest position of the trigger (33), abuts against a stop edge (36) of the trigger so as to hold the latch control cam (46) in the unlocking position, the pin (50) no longer interfering with said stop edge (36) when the trigger (33) is in the release position.

8. Rail (5) according to claim 7, wherein the latch control cam (46) is integral with a latch control mask (45) which comprises at least one retaining edge (48) engaging with a relief (44) of the latch to hold the latch (40) in the unlocked position when the latch control cam is in the unlocking position.

9. Vehicle seat comprising two rails (5) according to any one of the preceding claims and a seating portion (3) carried by said rails.

10. Seat according to claim 9, wherein each rail (5) comprises a motorized drive mechanism (14, 18).
